# EUROPEAN PATENT SPECIFICATION

(11) **EP 0 821 901 B1**
(45) Date of publication and mention of the grant of the patent: **27.09.2000**
(21) Application number: 96830433.7
(22) Date of filing: 31.07.1996
(51) Int. Cl.: A47J 27/00, A47J 27/022

(54) **A saucepan for cooking food**
Kochtopf zum Kochen von Nahrungsmitteln
Casserole pour cuisiner des aliments

(43) Date of publication of application: 04.02.1998
(73) Proprietor: Tutto S.p.A., 20094 Corsico (Milano) (IT)
(72) Inventor: Morando, Mauro, 28041 Arona (Novara) (IT)
(74) Representative: Righetti, Giuseppe

(56) References cited:
- EP-A- 0 525 453
- FR-A- 967 003
- FR-E- 30 399
- FR-E- 84 408
- GB-A- 620 959

## Description

The present invention relates to a saucepan for cooking food.

In particular, the invention pertains to saucepans for cooking food made of low-heat-conductivity metal material, such as stainless steel for example.

It is known that saucepans of this typology are comprised of a stainless steel holding body the bottom of which is associated with a base body comprising a layer of thermally conductive material, preferably aluminium, capable of conveniently receiving and transmitting heat to said bottom wall.

In the most recent embodiments, the layer of thermally conductive material in the base body has been advantageously coated with a protective layer, preferably of stainless steel too, capable of resisting agents such as oxidation, corrosion, surface abrasion and others to a greater extent than aluminium.

In addition, extensively distributed on the market in recent years have been saucepans having a base body of a capsule-like structure, that is such structured as to ensure a good heat transmission on the one hand, and an appropriate durability in time, on the other hand.

It is also known from FR-E-84408 a saucepan having a layer made of conductive material interposed between the bottom wall of the saucepan and a further protective layer resistant to corrosion. In a particular embodiment the conductive and the protective layers partly extend on the side wall of the saucepan.

Moreover document FR-E-30399 discloses a kitchen utensil having a containing body and a frusto-conical base. This base is made of an external metallic layer and of an internal insulating layer.

Although saucepans of the above described type are widespread, they have proved to be subjected to further improvements, in particular with reference to the capability of the base body to receive and transmit heat from conventional heating means, be it in the form of a flame or an electric heating element, on which the saucepan is disposed.

In this connection it is to point out that the capability of the traditional base bodies to receive and transmit heat generated by the heating means in the most efficient manner is closely connected with two factors:
- the size the the base body surface directly impinged on by heat from the heating means; and
- the conformation of the layer of good heat conductivity, which conformation clearly gives rise to the efficiency in transmitting heat to the holding body.

The Applicant therefore has aimed at making a saucepan provided with a base body which, on the one hand, was able to as much as possible maximize the capability of receiving heat generated by the heating means and, on the other hand, was able to ensure the maximum efficiency in transmitting this heat to the holding body of the saucepan itself.

Accordingly, it is a fundamental aim of the present invention to solve the above problem by providing a saucepan offering greatly higher performance as compare with the other saucepans presently on the market.

The above and still further aims that will become more apparent in the progress of the present description are substantially achieved by a saucepan for cooking food in accordance with the description of the appended claim 1.

Further features and advantages will be best understood from the detailed description of a preferred and not exclusive embodiment of a saucepan for cooking food in accordance with the present invention. This description will be taken hereinafter with reference to the accompanying drawings given by way of a non-limiting example, in which:
- Fig. 1 shows a diagrammatic sectional view of a saucepan for cooking food in accordance with the present invention; and
- Fig. 2 shows an enlarged portion of the saucepan represented in Fig. 1.

With reference to the drawings, a saucepan for cooking food in accordance with the present invention has been generally identified by reference numeral 1.

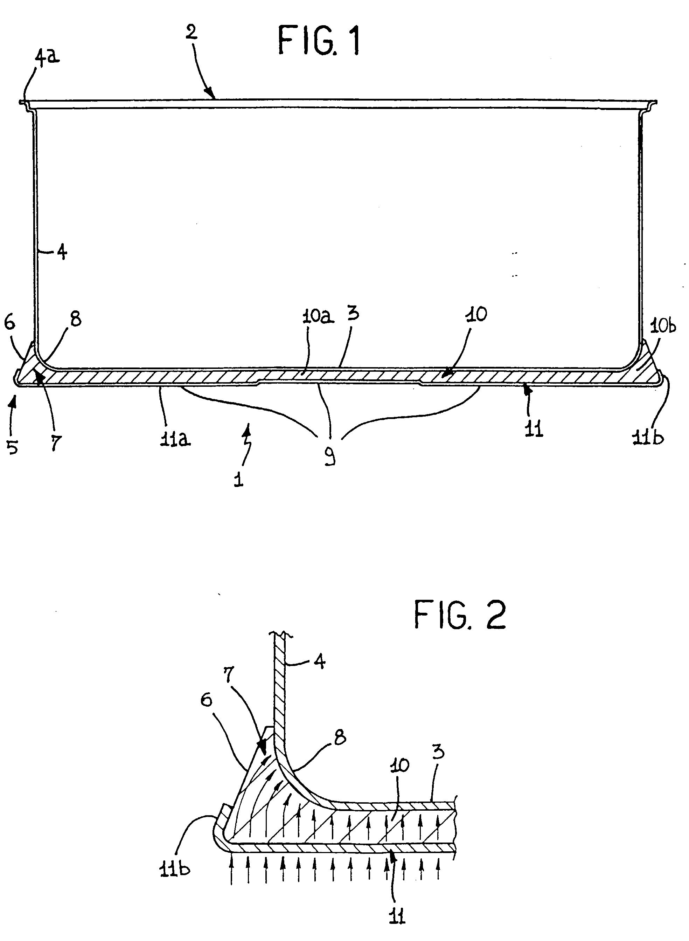

Saucepan 1 comprises a holding body 2, preferably made of a stainless steel material, having a bottom wall 3 and a side wall 4 emerging from said bottom wall. Obviously both the side and bottom walls, 4 and 3 respectively, can have any conformation depending on requirements. For example, either a flared side wall 4 or a side wall 4 emerging at right angles from the bottom wall 3, as shown in Fig. 1, may be provided. At all events, the side wall 4 usually has a turned out upper rim 4a arranged to define a housing for receiving a covering element not shown.

In the same manner, a bottom wall 3 of circular, elliptical, polygonal form or still other shapes may be provided.

Defined below the bottom wall 3 of the holding body 2 is a base body 5 arranged to receive heat generated by heating means not shown (consisting of conventional gas cookers or an electric heating element, for example) and transmit the received heat to the holding body 2.

In an original manner, the bass body 5 has a side wall 6 of a conformation diverging away from the holding body.

Practically, the base body 5 is substantially defined by a frustum of a cone, connected to the holding body substantially to the bottom wall 3 thereof.

Preferably, the base body 5 has an attachment area 7 for connection to the holding body 2 disposed at an annular connecting band 8 between the side wall 4 and the bottom wall 3 of the holding body 2.

In this manner the base body 5 is better anchored to the holding body and a better heat transmission to the bottom wall 3 is obtained in that contact with the base body 5 also concerns this connecting band 8.

As shown in the accompanying drawings, the base body 5 has a minimum radial bulkiness at the attachment area 7 and a maximum radial bulkiness at a resting area 9 opposed to the bottom wall 3 of the holding body 2, so as to make the saucepan 1 very steady.

It is also to note that the base body 5 is comprised of an intermediate layer 10 of good heat conductivity preferably made of aluminium, which is put directly into contact at least with the bottom wall 3. Associated with the lower part of the intermediate layer 10 is at least one protective outer layer 11, preferably made of stainless steel, which has a greatly thinner thickness than the intermediate layer and is intended for ensuring a good resistance to corrosion, abrasion and similar agents, without however reducing the heat-transmission capability that the base body 5 necessarily must have.

As shown in the accompanying drawings, the intermediate layer 10 has a centre area 10a of a substantially constant thickness and a perimetric area 10b of a radially variable thickness. More particularly, the perimetric area 10b, moving radially from the inside to the outside of saucepan 1, first has an increasing thickness so as to define a reinforcement ring for the connecting area 8 and subsequently a decreasing thickness to define said side wall 6.

In turn, the protective outer layer 11 has a base portion 11a which is substantially flat and parallel to the bottom wall 3 and practically defines the resting area 9 of saucepan 1, and a side portion 11b perimetrically emerging from the base portion 11a and engaging the wall 6 of the intermediate layer 10 at least partly.

The invention achieves important advantages.

First of all it is to point out that, due to the particular conformation of the base body, the thermal efficiency of saucepan 1 is increased in that, as compared with traditional saucepans, on the one hand the surface of the resting area directly in contact with the heating means is greatly augmented and, on the other hand, also greatly augmented is the surface of the holding body 2 directly in contact with the intermediate layer 10.

With reference to the last mentioned aspect, it is in fact to point out that the intermediate layer is capable of transmitting heat both to bottom 3 and to the connecting annular band 8 thereby achieving the highest operating efficiency never reached until now without giving rise to particular unaesthetical effects.

It is also important to note that, in spite of the particular conformation of the base body in accordance with the invention, the radial bulkiness of the saucepan does not undergo particular variations in that usually all saucepans are provided with a turned-out rim 4a designed to define a housing for the covering element associable therewith.

It is also important to note that, due to the particular conformation of the base body in the form of a truncated prism, the saucepan, in addition to having a greater capability of storing heat which results in a reduced energy consumption, also possesses an important quality in terms of safety. In fact, being the saucepan bottom in the form of a truncated prism, said saucepan is very steady and it is also impossible to cause overturning of same even if it is filled and used without paying too much attention.

The invention is also advantageous in its most specific details.

In fact, due to the fact that engagement of the attachment area, 7 is provided at the annular connecting band 8 and does not concern the cylindrical side wall 4 of saucepan 1, discharging of inner tensions possibly built up during the manufacturing step when heat coupling of the base body with the saucepan bottom wall 3 occurs, is facilitated.

More particularly, due to the curvature of the annular connecting band 8, during the shrinkage step the material forming the intermediate layer 10 can carry out relative slippings in respect of the material forming the holding body 2 without encountering too much resistance and therefore without generating too many stress concentrations that, in conclusion, can lead to separation of the base body from the bottom wall 3.

From the above point of view an important role is also performed by the only-partial engagement of the side portion 11b of the protective outer layer 11 with the side wall 6 of the intermediate layer 10.

In this manner in fact the outer layer 11 ensures a good protection without on the other hand incapsulating the intermediate layer, which would inhibit any deformation due to tension discharging.

## Claims

1. A saucepan for cooking food, comprising:
- a holding body (2) having a bottom wall (3) and a side wall (4) emerging from said bottom wall;
- a base body (5) defined below said bottom wall (3) and arranged to receive and transmit heat to said holding body (2);
- said base body (5) comprising at least one intermediate layer (10), disposed directly in contact with at least said bottom wall (3), and at least one protective outer layer (11), having a flat base portion (11a) parallel to the bottom wall (3) and associated with the intermediate layer (10) at least at a lower part thereof;
- said base body (5) presenting also an attachment area (7) for connection to said holding body (2) disposed close to an annular connecting band (8) between the side wall (4) and the bottom wall (3) of the holding body (2), the base body (5) being substantially a frustum of a cone having a minimum radial bulkiness at said attachment area (7) and a maximum radial bulkiness at a resting area (9) opposed to said bottom wall (3) of the holding body (2) and having a side wall (6) of a conformation diverging away from said holding body (2);
- said intermediate layer (10) having a centre area (10a) of a substantially constant thickness and a perimetric area (10b) of annular conformation which, moving radially from the saucepan inside to the outside, first has an increasing thickness so as to define a reinforcement ring for said connecting area (8) and subsequently a decreasing thickness to define said side wall (6),
characterized by the fact that the protective outer layer (11) has a side portion (11b) emerging perimetrically from the base portion (11a) and only partly engaging the side wall (6) of the intermediate layer which is of good heat conductivity, the base body (5) being engaged to the bottom wall (3)by heat coupling.

2. A saucepan according to claim 1, characterized in that said intermediate layer (10) is made of aluminium.

3. A saucepan according to claim 1, characterized in that said protective outer layer (11) is made of steel.

## Patentansprüche

1. Nahrungsmittelkochtopf, umfassend:
- ein Gefäß (2) mit einer Bodenwand (3 und einer sich von der Bodenwand erhebenden Seitenwand (4);
- einen Basiskörper (5), der unterhalb der Bodenwand (3) festgelegt und dazu ausgelegt ist, die Wärme zu speichern und dem Gefäß (2) zu übertragen;
- wobei der Basiskörper (5) mindestens eine unmittelbar mindestens die Bodenwand (3) berührende Zwischenlage (10) und mindestens eine Außenschutzschicht (11) umfasst, die einen ebenen und zur Bodenwand (3) Basisabschnitt (11a) besitzt und mindestens unten der Zwischenlage (10) zugeordnet ist;
- wobei der Basiskörper (5) auch einen Ansatzbereich (7) zur Verbindung mit dem Gefäß (2) aufweist, der im Bereich eines ringförmigen Übergangsgürtels (8) zwischen der Seitenwand (4) und der Bodenwand (3) des Gefäßes (2) angeordnet ist, wobei der Basiskörper (5) im wesentlichen ein Kegelstumpf mit einem Mindestmass an radialen Platzbedarf in einem Auflagebereich (9) ist, welcher der Bodenwand (3) des Gefäßes (2) abgewandt ist und eine Seitenwand (6) divergenter Ausbildung unter Entfernung vom Gefäß (2) besitzt;
- wobei die Zwischenlage (10) einen mittigen Bereich (10a) im wesentlichen konstanter Dicke und eine Umfangsbereich (10b) ringförmiger Ausbildung aufweist, der, von radial innen nach außen der Pfanne, zuerst eine derartig wachsende Dicke besitzt, dass ein Verstärkungsring des Übergangsbereichs (8) festgelegt wird, und dann eine abnehmende Dicke zur Festlegung der Seitenwand (6) aufweist,
- dadurch gekennzeichnet, dass die Außenschutzschicht (11) eine Seitenabschnitt (11b) aufweist, der sich umlaufend vom Basisabschnitt (11a) erhebt und nur teilweise die Seitenwand (6) der Zwischenschicht mit guter Wärmeleitfähigkeit ergreift, wobei der Basiskörper (5) an der Bodenwand (3) über Wärmepassung in Eingriff steht.

2. Kochtopf nach Anspruch 1, dadurch gekennzeichnet, dass die Zwischenlage (10) aus Aluminium besteht.

3. Kochtopf nach Anspruch 1, dadurch gekennzeichnet, dass die Außenschutzschicht (11) aus Stahl besteht.

## Revendications

1. Casserole pour cuisiner des aliments, comprenant:
- un corps formant contenant (2) ayant une paroi de fond (3) et une paroi latérale (4) émergeant de ladite paroi de fond;
- un corps de base (5) défini à sa partie inférieure par ladite paroi de fond (3) et arrangé de manière à recevoir et transmettre la chaleur audit corps formant contenant (2);
- ledit corps de base (5) comprenant au moins une couche intermédiaire (10) disposée directement en contact avec au moins ladite paroi de fond (3), et au moins une couche extérieure de protection (11) ayant une portion de base (11a) plate et parallèle à la paroi de fond (3) et associée au moins à sa partie inférieure à la couche intermédiaire (10);
- ledit corps de base (5) présentant aussi une zone de jonction (7) pour la liaison audit corps formant contenant (2) disposée en correspondance d'une bande de raccordement annulaire (8) entre la paroi latérale (4) et la paroi de fond (3) du corps formant contenant (2), le corps de base (5) étant essentiellement un tronc de cône ayant un encombrement radial minimum en correspondance d'une zone d'appui (9) opposée à ladite paroi de fond (3) du corps formant contenant (2) et ayant une paroi latérale (6) de conformation divergente en s'éloignant dudit corps formant contenant (2);
- ladite couche intermédiaire (10) présentant une zone centrale (10a) d'épaisseur sensiblement constante et une zone périmétrique (10b) de conformation annulaire qui, en avançant en sens radial de l'intérieur vers l'extérieur de la casserole, a d'abord une épaisseur allant croissant de manière à définir une bague de renforcement de ladite zone de raccordement (8) et ensuite une épaisseur allant décroissant pour définir ladite paroi latérale (6),
caractérisée en ce que la couche extérieure de protection (11) présente une portion latérale (11b) émergeant sur son pourtour de ladite portion de base (11a) et n'engageant que partiellement la paroi latérale (6) de la couche intermédiaire qui a une bonne conductivité thermique, le corps de base (5) étant engagé à la paroi de fond (3) par accouplement à chaud.

2. Casserole selon la revendication 1, caractérisée en ce que ladite couche intermédiaire (10) est réalisée en aluminium.

3. Casserole selon la revendication 1, caractérisée en ce que ladite couche extérieure de protection (11) est réalisée en acier.
